# FASCICULE DE BREVET EUROPEEN

(11) **EP 1 617 197 B1**
(45) Date de publication et mention de la délivrance du brevet: **28.01.2009**
(21) Numéro de dépôt: 05108602.3
(22) Date de dépôt: 25.06.2002
(51) Int. Cl.: G01L 5/16, G01L 5/22, G01M 17/02

(54) **Pneumatique comportant un dispositif de mesure de forces**
Eine Kraftmesseinrichtung beinhaltender Reifen
Tyre incorporating a force measuring device

(30) Priorité: 10.07.2001 FR 0109130
(43) Date de publication de la demande: 18.01.2006
(62) Demande divisionnaire de: 02014144.6
(73) Titulaire: COMMISSARIAT A L'ENERGIE ATOMIQUE, 75015 Paris (FR)
(72) Inventeur: Poulbot, Valéry, 63430 Les Martres d'Artières (FR); Rey, Patrice, 38430 Saint Jean de Moirans (FR)
(74) Mandataire: Santarelli

(56) Documents cités:
- EP-A- 0 525 830
- EP-A- 0 549 807
- EP-A- 0 631 142
- EP-A- 0 869 367
- WO-A-00/23778
- DE-A1- 19 924 738
- JP-A- 2000 249 609
- US-B1- 6 378 381

## Description

La présente invention concerne un dispositif de mesure de forces, notamment pour pneumatique.

### ETAT DE LA TECHNIQUE ANTERIEURE

On connaît par le brevet US-A-5 864 056 un capteur de fores ayant l'allure générale d'un clou, à insérer dans un pneumatique. Le corps du clou est une lame souple équipée de deux jauges de contraintes montées dos à dos et la tête du clou comporte au moins deux disques rigides transversaux à la tige, séparés par un tube orienté dans le sens de la tige.

L'inconvénient majeur de cette structure est son absence de sensibilité dans l'axe de la tige. Elle ne peut saisir que les composantes d'une force situées dans un plan transversal à l'axe de la tige. Or il est important de connaître toutes les composantes de la force, pour détecter avec un même capteur un manque d'adhérence par exemple.

On connaît aussi par la demande de brevet EP-A-0 937 615 un capteur de force de type clou pour pneumatiques. Ce capteur de type clou, comporte une tige rigide dont une extrémité est libre et dont l'autre extrémité est solidaire d'une tête prenant la forme d'une première plaque conductrice de l'électricité, transversale à la tige. Cette première plaque coopère avec d'autres plaques conductrices de l'électricité, placées en vis à vis et séparées par un matériau diélectrique, pour former des condensateurs. La tige est destinée à être insérée, par son extrémité libre, dans la bande de roulement du pneumatique. Lorsque la tige est sollicitée par une force correspondant à un effort subi par la bande de roulement, elle entraîne dans son mouvement la première plaque et il se produit une variation des valeurs des capacités des condensateurs ainsi formés. Cette structure présente quant à elle d'autres inconvénients.

Le capteur est un dispositif macroscopique, I1 est susceptible de modifier, par sa simple présence, le comportement mécanique de la bande de roulement dont il prétend mesurer les efforts. Les informations qu'il fournit peuvent donc être entachées d'erreurs. L'assemblage des différentes parties du capteur n'est pas réalisable par des technologies de la microélectronique.

Ce capteur ne fonctionne qu'avec des condensateurs qui nécessitent une électronique de traitement de proximité.

Le diélectrique peut avoir des propriétés électriques et élastiques variables avec l'environnement, la température, l'humidité. Ces variations sont à prendre en compte lors des interprétations des mesures.
Un tel capteur avec des plaques conductrices formant les électrodes d'un condensateur est également décrit dans le document EP 0 525 830.

### EXPOSÉ DE L'INVENTION

La présente invention a pour but de réaliser un capteur de force de type clou, qui ne présente pas les inconvénients de l'art antérieur notamment le manque de sensibilité dans l'axe de la tige du clou, les incertitudes concernant les informations qu'il fournit.

La présente invention propose un capteur de force de type clou comportant une tige rigide destinée à être sollicitée par la force à capter et une tête qui comporte un élément solidaire de la tige, destiné à être déformé ou contraint lorsque la tige est sollicitée. L'élément déformable porte des moyens de mesure de la déformation ou de la contrainte, et comporte des points d'ancrage qui ont une position donnée par rapport à la tige au repos et qui conservent sensiblement cette position lorsque la tige est sollicitée.
Ce type de capteur est décrit dans le document EP 0 549 807 ou WO 00/23778.
Le document JP 2000/249609 décrit également un tel capteur avec un capot protégeant l'élément déformable.
Selon l'invention, dans un capteur du type décrit ci-dessus, un circuit de traitement de mesure délivrée par les moyens de mesure est placé dans une cavité hermétique délimitée par le capot et délivre des informations vers l'extérieur de la cavité hermétique via une connexion qui traverse la fixation entre le capot et les points d'ancrage.

L'application de la force sur la tige à une certaine distance de l'élément déformable et l'ancrage de l'élément déformable en plusieurs points rendent possible non seulement la connaissance de la composante de la force dans un plan transversal à la tige mais aussi la connaissance de la composante de la force selon l'axe de la tige.

Les points d'ancrage peuvent être discrets ou bien continus sur le bord de l'élément déformable.

L'élément déformable peut être une membrane pleine ou comporter des bras rayonnants reliés entre eux dans une zone centrale au niveau de laquelle est fixée la tige.
Dans cette dernière configuration, les points d'ancrage sont situés aux extrémités des bras.

On peut utiliser quatre bras sensiblement orthogonaux, s'il y en a trois, il est préférable de les espacer sensiblement de 120 degrés les uns des autres pour obtenir une certaine symétrie autour de l'axe de la tige.

Le capot est adapté à protéger l'élément déformable, ce capot étant fixé aux points d'ancrage, la fixation entre le capot et les points d'ancrage étant traversée par une connexion électrique.

Le capot est particulièrement avantageux car notamment, en le fixant de manière étanche aux points d'ancrage, il contribue à délimiter une cavité hermétique dans laquelle peut régner une atmosphère contrôlée.

La fixation entre le capot et les points d'ancrage peut être équipée d'au moins un passage électrique.

La tige et l'élément déformable peuvent être réalisés à base de matériaux tels que le silicium, le quartz, le verre, un métal.

Les moyens de mesure peuvent être réalisés par au moins trois dispositifs de mesure de déformation ou de contrainte, répartis sur l'élément déformable.

Ces dispositifs de mesure peuvent être des jauges piézoélectriques ou piézorésistives, des condensateurs, des jauges métalliques extensométriques.

Une configuration particulièrement avantageuse est de réaliser l'élément déformable en silicium et de disposer les dispositifs de mesure selon les axes cristallins <110> de l'élément déformable.

D'autres caractéristiques et avantages de l'invention apparaîtront à la lecture de la description qui suit, illustrée par les figures des dessins annexés, Cette description est donnée à titre illustratif et non limitatif.

### BRÈVE DESCRIPTION DES DESSINS

Les figures 1A et 1B représentent de manière schématique une vue en perspective et une vue en coupe d'un exemple de capteur de force proposé dans l'invention.
Les figures 2A et 2B représentent de manière schématique une vue en perspective et une vue en coupe d'un autre exemple de capteur de force proposé dans l'invention.
La figure 3 montre, pour le capteur de force des figures 1A, 1B, les variations de la résistivité des jauges en fonction de l'angle que fait la force, dans le plan ((x, y)) transversal à l'axe de la tige, avec l'axe x, pour plusieurs valeurs de l'intensité de la composante de la force dans le plan (x, y).
La figure 4 montre, pour le capteur de force des figures 1A, 1B, les variations de la résistivité des jauges en fonction de l'angle que fait la force, dans le plan (x,y) transversal à l'axe de la tige, avec l'axe x, pour plusieurs valeurs de l'intensité de la composante de la force selon l'axe z transversal au plan ((x,y)).
La figure 5 montre une vue en perspective d'un troisième exemple d'un capteur de force proposé dans l'invention.
La figure 6 montre une vue en perspective d'un quatrième exemple d'un capteur de force proposé dans l'invention.
La figure 7 représente une coupe méridienne d'un pneumatique dont la bande de roulement est équipée d'un tel capteur, montrant une première façon de placer un tel capteur dans un élément de sculpture de la bande de roulement.
La figure 8 est un agrandissement d'une partie de la figure 7, montrant plus en détails l'implantation dudit capteur.
La figure 9 représente une deuxième façon de placer un tel capteur dans un élément de sculpture de la bande de roulement d'un pneumatique.
La figure 10 représente une troisième façon de placer un tel capteur, dans une bande de roulement d'un pneumatique.
Les figures 11 et 12 représente une quatrième façon d'implanter un tel capteur, dans une bande de roulement d'un pneumatique dont la sculpture est adaptée à cet effet.
La figure 13 montre une cinquième façon de placer un tel capteur, dans une bande de roulement d'un pneumatique.
La figure 14 montre une sixième façon de placer un tel capteur, dans une bande de roulement d'un pneumatique.
La figure 15 montre une septième façon de placer un tel capteur, dans une bande de roulement d'un pneumatique.
La figure 16 montre une façon de placer un tel capteur entre flanc et bourrelet d'un pneumatique.
La figure 17 montre une façon de placer un tel capteur dans une épaule d'un pneumatique.

Dans un souci de clarté, les dimensions des différents éléments ne sont pas représentées à l'échelle.

### EXPOSÉ DÉTAILLÉ DE MODES DE RÉALISATION PARTICULIERS

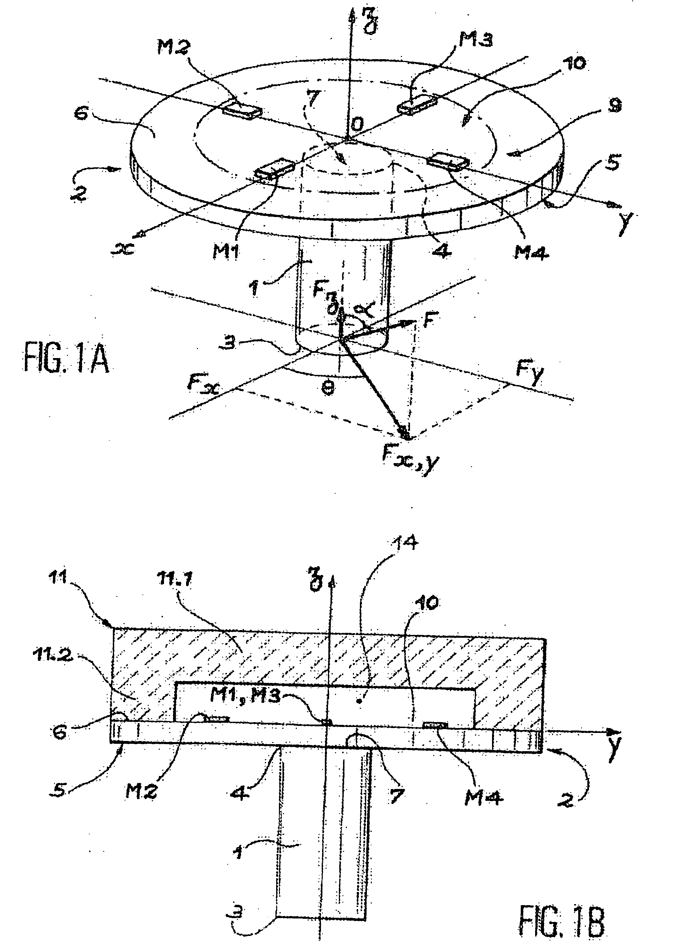

On se réfère aux figures 1A, 1B. Le capteur de force représenté est de type clou. Il comporte une tige 1 rigide surmontée d'une tête 2. La tige 1 est dirigée selon un axe z. Elle comporte une extrémité libre 3. Son autre extrémité 4 est solidaire de la tête 2. On a repéré avec des axes (x,y) orthogonaux, au niveau de la tête 2, un plan orthogonal à l'axe z.

La tige 1 est destinée à être sollicitée par une force F qui, dans le cas le plus général, se décompose en une composante F_{x,y} dans le plan (x,y) et une composante F, selon l'axe z. On suppose que la force F est décalée d'un angle α par rapport à l'axe z et que la composante F_{(x,y)} est décalée d'un angle θ par rapport à l'axe x. Un tel capteur permet de connaître les différentes composantes de cette force F.

Le point d'application de la force F est décalé par rapport à l'extrémité 4 de la tige 1 par laquelle elle est reliée à la tête 2.

La tête 2 du capteur de force comporte un élément 5 capable de se déformer lorsque la tige 1 est sollicitée par la force F. C'est cet élément 5 qui est relié à la tige 1. Dans l'exemple des figures 1A, 1B, l'élément déformable 5 est une membrane circulaire pleine. Sa liaison avec la tige 1 se fait dans une zone 7 centrale. L'élément déformable 5 est orienté sensiblement orthogonalement à la tige 1 lorsque cette dernière est au repos sans sollicitation.

L'élément déformable 5 comporte des points d'ancrage 6 qui possèdent une position par rapport à la tige 1 au repos et qui conservent sensiblement cette position alors que la tige 1 est sollicitée par la force F. Sur la figure 1A, il y a une multitude de points d'ancrage 6 continus, ils s'étalent sur une zone 9 périphérique qui borde la membrane 5. Avec un tel élément déformable, les points d'ancrage pourraient être discrets.

L'élément déformable 5 porte des moyens de mesure M1, M2, M3, M4 de la déformation qu'il subit. Sur la figure 1A, ces moyens de mesure sont réalisés par quatre dispositifs de mesure décalés les uns des autres d'un angle connu, par exemple 90°. Ils se trouvent dans une zone 10 médiane comprise entre la zone 7 de fixation de la tige 1 et la zone 9 périphérique des points d'ancrage. La tige 1 est fixée sur une face de l'élément déformable 5 tandis que les moyens de mesure M1, M2, M3, M4 sont portés par une autre face opposée à la première. On aurait pu placer les moyens de mesure et la tige sur la même face de l'élément déformable.

Pour conserver une symétrie de révolution, il est préférable de placer les différents dispositifs de mesure M1, M2, M3, M4 à une même distance du centre O de la membrane 5.

Les dispositifs de mesure M1, M2, M3, M4 peuvent être des jauges de contrainte de type piézorésistif et leur résistance varie alors en fonction de la déformation ou de la contrainte subies ou bien de type piézoélectrique et ils génèrent un courant ou une tension variables en fonction de la déformation subie. D'autres dispositifs de mesure peuvent être employés, par exemple, des jauges métalliques, des jauges extensométriques. D'autres dispositifs de mesure pourraient être employés.

Les points d'ancrage 6 sont destinés à coopérer avec des moyens d'ancrage 11 qui peuvent faire partie ou non du capteur de force selon l'invention. Les moyens d'ancrage ne sont visibles que sur la figure 1B. Ils prennent la forme d'un capot rigide 1 1 avec un fond 11.1 et une base 11.2. Plus précisément, c'est la base 11.2 du capot qui est fixée à la périphérie de la membrane 5. Cette fixation peut se faire par collage, par brasure, par scellement, etc.

Un avantage du capot 11 est qu'il a un rôle de protection des dispositifs de mesure M1, M2, M3, M4. Le capot est suffisamment épais et les points d'encrage suffisamment raides, pour éviter tout déplacement de la membrane au niveau des points d'ancrage 6 lorsqu'elle est entraînée par le mouvement de la tige sollicitée par une force.

Un autre avantage du capot 11 qui sert de moyens d'ancrage 11 est qu'il peut délimiter avec l'élément déformable 5 une cavité hermétique 14 en réalisant un scellement étanche avec ses points d'ancrage 6. L'élément déformable 5 est une membrane pleine circulaire et les points d'ancrage 6 sont alors continus le long de son bord. La présence de la cavité hermétique 14 permet de maintenir des jauges de contrainte particulières sous une atmosphère spécifique qu'elles exigent ou de les placer dans des conditions particulières en réalisant un isolement thermique par exemple. Dans cette cavité hermétique peut régner le vide ou un gaz neutre par exemple.

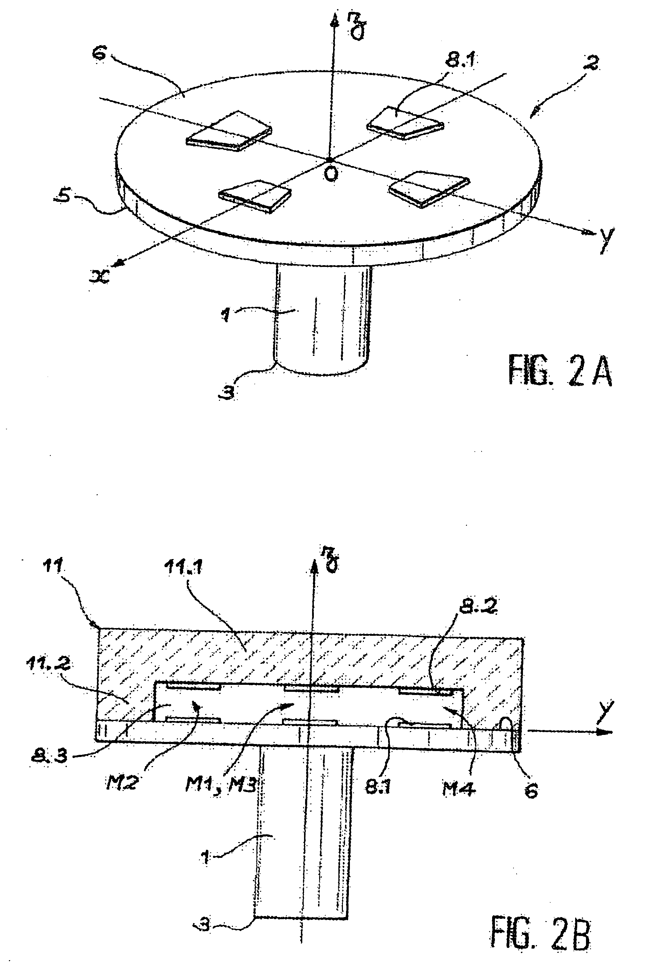

Les mesures délivrées par les dispositifs de mesure M1 doivent être traitées pour qu'elles soient exploitables. Il est possible que le capot 11 porte tout ou partie d'un circuit électronique de traitement, de façon analogue à ce qui est représenté à la figure 2B où le capot porte une seconde électrode 8.2, placée en vis à vis d'une première électrode 8.1 portée par l'élément déformable 5. Un tel circuit de traitement peut être placé dans la cavité hermétique 14, et fixé sur la paroi interne du fond 11.1 du capot 11. Il est relié électriquement aux moyens de mesure M1 via au moins une connexion électrique qui passe à travers le scellement. La continuité de la connexion peut se faire par une bille conductrice noyée dans le scellement.

Le circuit électronique de traitement délivre des informations vers l'extérieur de la cavité hermétique 14 via une connexion qui traverse la fixation entre le capot 11 et les points d'anerage 6. Le plot de connexion se trouve alors à l'extérieur de la cavité hermétique 14, du côté de la tige 1. On peut aussi implanter une connexion portée par les points d'ancrage 6 qui bordent la membrane 5. Cette configuration permet une liaison aisée du côté de la tige 1 ou du côté dirigée à l'opposé de l'extrémité libre 3 de la tige 1.

Le fait de pouvoir récupérer les informations issues du capteur des deux côtés de celui-ci autorise une grande variété de montages.

Le capot 11 peut être réalisé à base de matériaux tels que le silicium, le quartz, le verre, un métal. Un avantage du silicium est qu'il permet une intégration sur le capot lui-même du circuit électronique de traitement.

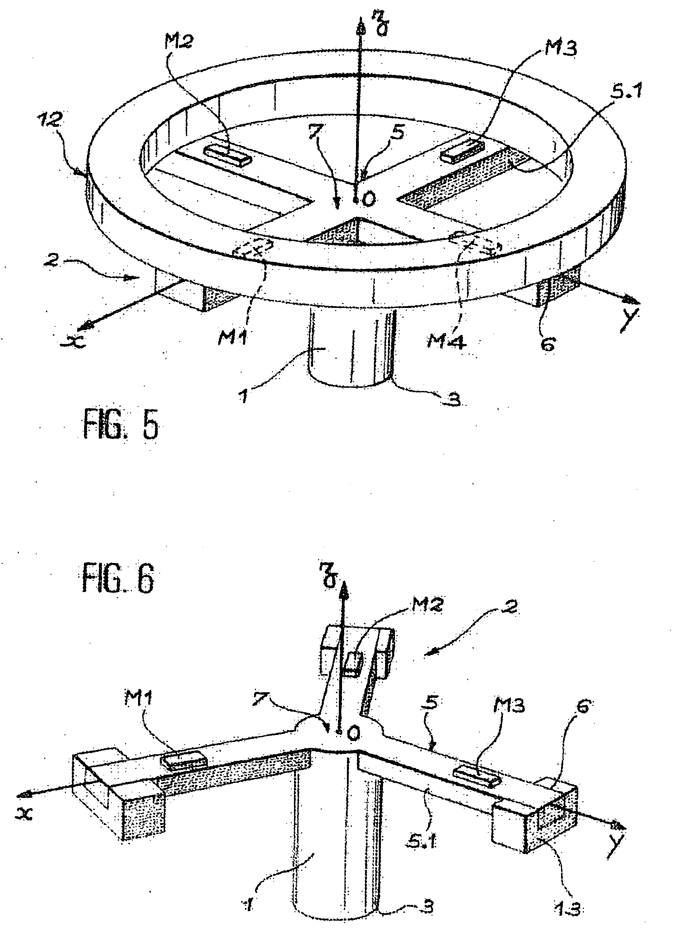

D'autres types de moyens d'ancrage sont bien sûr envisageables comme le montrent les figures 5 et 6 décrites ci-dessous.

La tige 1 peut être réalisée à base de matériaux tels que le silicium, le quartz, un métal tel que l'acier inoxydable.

L'élément déformable 5 peut aussi être réalisé à base de ces matériaux mais ne sera pas forcément du même matériau que la tige 1.

Des simulations ont été réalisées avec un capteur de force similaire à celui des figures 1A, 1B. Il possède une tige et une membrane en silicium. Le capot est également en silicium.

Les dimensions de la membrane sont les suivantes (pour mesure une force de l'ordre de 100 Newton)
Rayon : 1 millimètre
Epaisseur : 50 micromètres
Largeur de la zone d'ancrage : 500 micromètres.
Cette dimension correspond à la largeur du capot au niveau de sa base.

Les dimensions de la tige sont les suivantes
Longueur : 500 micromètres
Rayon : 200 micromètres

Les dimensions du capot sont les suivantes
Epaisseur du capot au niveau de son fond : 300 micromètres
Dégagement du capot : 200 micromètres.

Les dispositifs de mesure, au nombre de quatre sont des jauges piézorésistives placées sur les axes cristallins <110> de la membrane en silicium, à la même distance du centre O de la membrane.

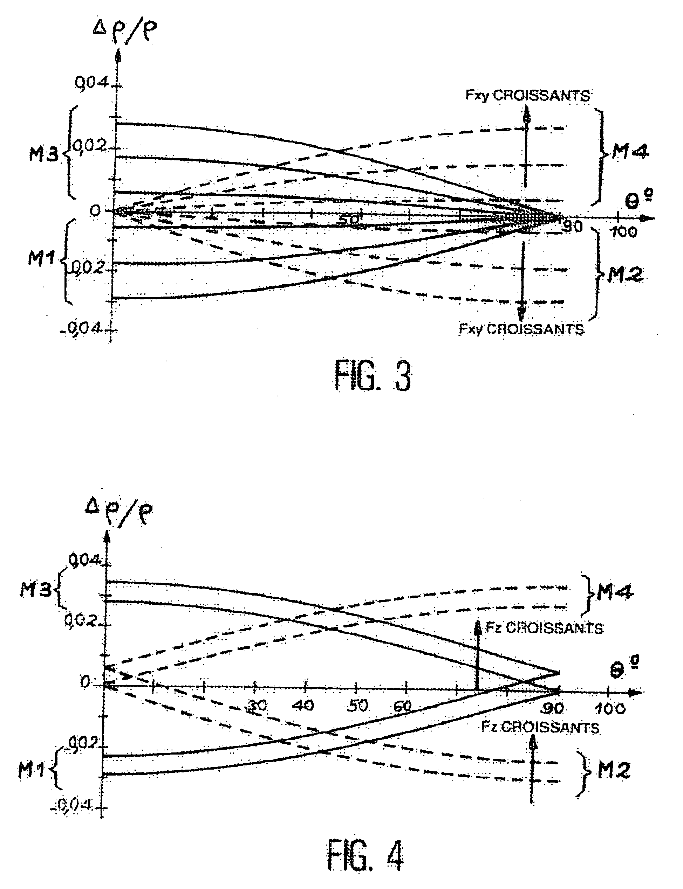

Les courbes de la figure 3 illustrent la variation de la résistivité Δρ/ρ des quatre jauges M1, M2, M3, M4 lorsque la tige est sollicitée par une force F_{(x,y)} (F_{z} =O) faisant un angle θ variable entre 0 et 90° par rapport à l'axe x. Les jauges M1 et M3 sont diamétralement opposées sur l'axe x et les jauges M2 et M4 sont diamétralement opposées sur l'axe y. Pour chacune des jauges, on a représenté trois courbes qui correspondent à deux valeurs extrêmes et une valeur intermédiaire de forces dans le plan (x,y).

Ces faisceaux de courbes présentent une symétrie par rapport à Δρ/ρ = 0 et à θ = 45°.

Une sollicitation donnée F_{(x,y,0)}, faisant une angle θ par rapport à l'axe x, induit au niveau de deux jauges placées symétriquement par rapport au centre O de la membrane, sur un même axe passant par le centre O, des variations de résistivité égales et opposées.

D'autres simulations effectuées en faisant varier l'angle θ en fonction de la force F_{(x,y,0)} et en conservant Δρ/ρ constant, montrent que deux jauges M1, M2 non alignées avec le centre de la membrane, placées, de préférence, sur des axes orthogonaux (x,y) permettent de déterminer le couple de valeurs F_{(x,y,0)} et θ, qui caractérise une force F d'intensité et d'orientation quelconques dans le plan (x,y) passant par « 0 ».

Les courbes de la figure 4 montrent à la manière de celles de la figure 3, la variation de la résistivité Δρ/ρdes quatre jauges M1, M2, M3, M4 en fonction de l'angle θ pour différentes valeurs de la force F_{Z} avec F_{(x,y)} constante. Pour F_{(x,y,0)} et 0 donnés, l'application d'une force F_{Z}, suivant z induit une variation Δρ/ρ de résistivité identique sur chacune des jauges de contraintes M1, M2, M3, M4.

Comme vu précédemment, deux jauges de contraintes disposées symétriquement par rapport au centre O, soit sur l'axe x soit sur l'axe y subissent pour F_{(x,y,0)} et θ quelconques des variations égales et opposées.

Ces deux propriétés permettent de démonter que la moyenne des variations de résistivité Δρ/ρ d'un couple de jauges de contraintes disposées sur un même axe x ou y symétriquement par rapport au centre O est proportionnelle à F_{Z}.

Les mesures délivrés par un couple de dispositifs de mesure M1, M3 diamétralement opposés, permettent de connaître F_{Z}, tandis que les mesures délivrés par un couple de dispositifs de mesure M1, M2 placés sur des axes orthogonaux permettent de connaître F_{(x,y)} et θ. Avec une telle structure, trois dispositifs de mesure seulement permettent de remonter à F_{(x,y)}, F_{Z} et θ.

D'autres répartitions des dispositifs de mesure sont bien sûr possibles pour remonter à F_{(x,y)}, F_{Z} et θ comme l'illustre la figure 6.

La configuration avec un élément déformable en silicium est particulièrement avantageuse car c'est un matériau qui présente une contrainte à la rupture élevée. Sa fabrication peut se faire collectivement de manière simplifiée. On peut aisément miniaturiser le capteur.

On se réfère maintenant aux figures 2A et 2B qui montrent une première variante d'un capteur de force conforme à l'invention. Ce capteur est similaire à celui des figures 1A et 1B. On retrouve la tige 1, la tête 2 avec l'élément déformable 5 en forme de membrane pleine circulaire. Les points d'ancrage 6 sont identiques à ceux de l'exemple précédent et on retrouve le capot 11 sur la figure 2B. Il n'est pas visibte sur la figure 2A.

La principale différence se situe au niveau des dispositifs de mesure M1, M2, M3, M4 de la déformation subie par l'élément déformable 5 lorsque la tige 1 est sollicitée par une force. Ces dispositifs de mesure sont réalisés par des condensateurs dont une première électrode 8.1 est portée par l'élément déformable 5 et dont une seconde électrode 8.2 est placée en vis à vis. Deux électrodes 8.1, 8.2 en vis à vis sont séparées par un milieu diélectrique 8.3.

Dans l'exemple de la figure 2B, la seconde électrode 8.2 des condensateurs est portée par le fond 11.1 du capot 11, sur sa face interne et le milieu diélectrique 8.3 est constitué par le milieu gazeux qui règne dans la cavité 14 délimitée par le capot 11 et la membrane 5. La cavité 14 est alors rendue étanche. Ce milieu diélectrique peut être le vide ou choisi parmi un ou plusieurs de ces gaz : l'air, un gaz neutre tel que l'argon ou l'azote par exemple.

On pourrait envisager que le milieu diélectrique soit solide (par exemple un polymère isolant) au lieu de gazeux ou vide, et que les électrodes soient en contact avec lui. Comme matériau diélectrique solide on peut utiliser un polymère par exemple.

Lorsque la tige 1 est sollicitée, elle entraîne en mouvement la membrane qui en se déformant déplace les premières électrodes 8.1 des condensateurs. Ce déplacement entraîne une variation de la valeur de leur capacité.

On se réfère maintenant aux figures 5 et 6. Elles montrent d'autres exemples de capteur de force selon l'invention.

Par rapport aux figures 1 et 2, on retrouve la tige 1, la tête 2 comportant un élément déformable 5 supportant des moyens de mesure Mi, M2, M3, M4 de sa déformation et avec des points d'ancrage 6. Mais maintenant l'élément déformable 5 comporte des bras 5.1 rayonnants reliés entre eux dans une zone centrale 7 au niveau de laquelle est fixée la tige 1. Les bras ont sensiblement la même longueur. Sur la figure 5, l'élément déformable 5 est en forme de croix avec quatre bras 5.1 sensiblement orthogonaux. Les moyens de mesure sont réalisés par autant de dispositifs de mesure que de bras. Chaque bras 5.1 porte un dispositif de mesure M1, M2, M3, M4 de la déformation qu'il subit lorsque la tige 1 est sollicitée. Ces dispositifs de mesure ont été représentés de même nature que sur les figures 1, c'est à dire piézoélectriques, piézorésistifs, métalliques, extensométriques, mais ils auraient très bien pu être de type capacitif.

Les points d'ancrage 6 sont maintenant discrets, ils sont situés aux extrémités des bras 5.1. Les moyens d'ancrage 12 prennent la forme d'un cadre auquel les extrémités des bras sont fixées. Il est suffisamment rigide pour que les points d'ancrage puissent conserver sensiblement la même position par rapport à celle de la tige 1 au repos quelle que soit la position prise par la tige lorsqu'elle est sollicitée. Ce cadre 12 peut être annulaire ou carré. Il peut être réalisé en métal, quartz, silicium ou verre. Un tel cadre aurait pu être employé à la place du capot avec une membrane pleine analogue à celle représentée aux figures 1A, 1B.

Au lieu que l'élément déformable comporte quatre bras et qu'il soit équipé de quatre dispositifs de mesure, il est possible de se limiter à trois bras 5.2 et donc trois dispositifs de mesure. Trois dispositifs de mesure convenablement répartis suffisent pour remonter à toutes les caractéristiques F_{(x,y)}, F_{z} et θ d'une force F quelconque. Cette variante est illustrée à la figure 6.

Les trois bras forment sensiblement la lettre Y et sont décalés les uns des autres d'environ 120°. Les bras ont sensiblement la même longueur. Les points d'ancrage 6 sont situés aux extrémités des bras 5.1. On peut envisager que les points d'ancrage 6 coopèrent avec des moyens d'ancrage n'appartenant pas au capteur de force. Sur la figure 6, les moyens d'ancrage 13 prennent la forme de plots dans lesquels viennent se loger les extrémités de bras 5.1. Ces plots 13 pourraient, par exemple, dans l'application manette de commande être portés par le socle.

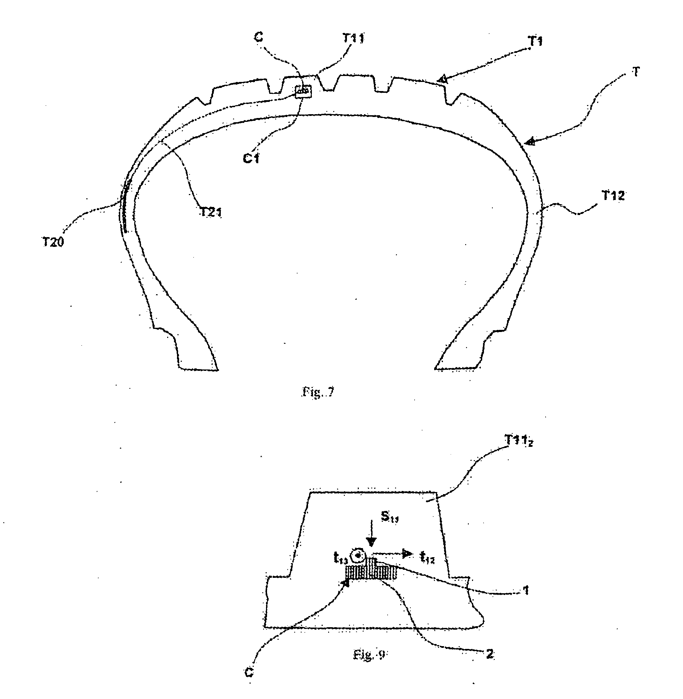

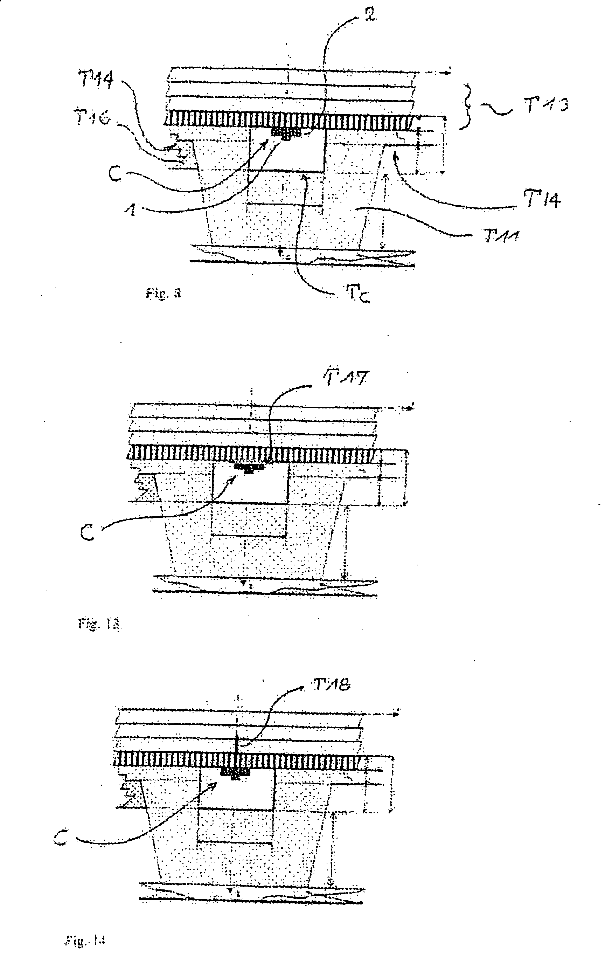

A la figure 7, on aperçoit un pneumatique T, pourvu d'une bande de roulement T1. La bande de roulement comporte un élément de sculpture T11, à savoir une nervure faisant par exemple tout le tour de la bande de roulement. L'élément de sculpture T11 comporte un capteur C, inséré de préférence dans une zone non usante de celle-ci, comme on le voit plus en détails à la figure 8, où l'on a représenté seulement l'élément de sculpture T11, en contact avec le sol. Le pneumatique T comporte une armature de renforcement T13, généralement composée de fils textiles et/ou métalliques, noyés dans un élastomère chargé. Il va de soit que l'armature de renforcement ne fait pas partie en soi de la présente invention, et qu'il est inutile d'en rappeler toutes les conceptions dans le contexte de la présente invention.

A la figure 8, est également schématisé un témoin d'usure T16, constitué comme bien connu en soi d'une surépaisscur de caoutchouc moulée dans le fond d'un sillon T14. La zone encadré T_{C} représente la zone préférentielle d'insertion du capteur C dans la bande de roulement T1.

Lors de la fabrication des pneumatiques, on connaît différentes étapes, incluant une étape consistant à enrouler la bande de roulement sur une ébauche de pneumatique. A ce stade, le pneumatique est dit cru. Ensuite, il est moulé et vulcanisé en presse de cuisson au moyen d'un moule. Le capteur C peut être positionné au cours de la fabrication, sur l'armature de renforcement T13, juste avant l'étape d'enroulement de la bande de roulement T1. L'homme du métier pourra adapter la technique d'insertion du capteur, suivant le procédé de fabrication du pneumatique qui est employé.

Lors de l'étape de moulage du pneumatique en tout début de la vulcanisation, l'élastomère chargé constituant la bande de roulage est susceptible de subir des déplacement fluides sous l'action conjuguée de la pression de moulage et de l'augmentation de la température. Pour éviter que le capteur ne subisse un déplacement par rapport à sa position initiale dans le bandage cru, on peut réaliser un insert C1 (voir figure 7) prémoulé et au moins partiellement vulcanisé, contenant le capteur. L'insert comporte un petit volume d'élastomère chargé, de préférence de même composition que celui de la bande de roulement. L'insert peut contenir l'embase, le ou les ergots ou l'accessoire, décrits ci-dessus. Un tel insert prémoulé peut faciliter un positionnement relatif précis des différents composants que contient l'insert,-et favorise également le positionnement précis de tous ces composants dans le pneumatique. L'insert C1 est bien entendu implanté dans la zone encadré T_{C}.

Il est également possible d'opter pour une technique inspirée du rechapage. Une bande de roulement contenant les composants évoqués ci-dessus est prémoulée, voire prévulcanisée au moins partiellement, et rapportée sur une ébauche, la vulcanisation de l'ensemble étant achevée pour bien rendre solidaires tous ces éléments.

Afin de favoriser une bonne transmission à la partie sensible du capteur des efforts subit par l'élastomère chargé dans lequel est inséré le capteur, on peut prévoir un traitement préalable de la surface du capteur et des différents composants éventuellement utilisés, par exemple au moyen d'un produit disponible dans le commerce comme le Chémosyl, ou tout autre produit destiné à assurer la cohésion entre un élastomère chargé et un autre élément. Un traitement de ce type a également pour avantage d'assurer une bonne cohésion entre eux des différents constituants du pneumatique, y compris les éléments rapportés, et donc d'assurer en utilisation une bonne endurance du pneumatique.

Le capteur C est ainsi situé dans la partie de la bande de roulement non soumise à l'usure en utilisation normale du pneumatique. Le capteur C lui-même est représenté de façon schématique dans cette zone, sans préjuger de sa taille exacte par rapport à l'élément de sculpture T11, les éléments de sculpture pouvant être de taille et de forme très différentes suivant le type de pneumatique et la dimension du pneumatique.

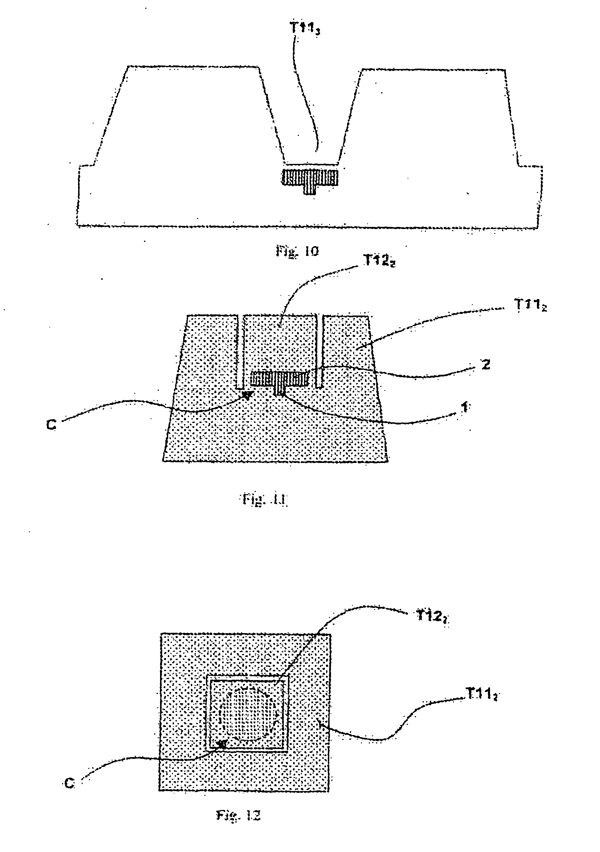

Le capteur C n'est représenté centré par rapport à l'élément de sculpture sur les figures 7 et 8 que pour des besoins illustratifs. Il va de soi que le capteur peut occuper une position non centrée par rapport à un élément de sculpture, que ce soit dans le sens longitudinal ou transverse de cet élément. Il peut être positionné avec sa tige 1 orientée vers la surface de la bande de roulement T1, comme aux figures 7 à 9 et 13 à 15, ou en sens contraire comme aux figures 10 et 11.

En consultant la figure 9, on voit que le capteur C permet de mesurer trois contraintes : une contrainte de compression notée s₁₁, et deux contraintes de cisaillement notées t₁₂ et t₁₃. Ce capteur, placé dans une partie non usante de l'élément de sculpture T11, permet de mesurer les contraintes existantes dans cet élément de sculpture pendant toute la durée de vie du pneumatique, ou au moins d'en obtenir une représentation suffisamment fidèle pour être exploitable utilement. Le capteur C permet de fournir une indication de l'effort appliqué perpendiculairement à la surface de contact dudit élément de scupture avec le sol, ainsi que des indications sur les efforts tangentiels appliqués à cet élément de sculpture dans ladite surface de contact.

Appliqué à un type de pneumatique décrit dans la demande de brevet EP1076235A1, il est possible d'estimer par exemple le potentiel de frottement de cet élément de sculpture et le potentiel d'adhérence du pneumatique.

Le capteur C peut être inséré dans un élément de sculpture T11 supposé continu dans le sens circonférentiel de la bande roulement T1, comme aux figures 7 et 8 ou encore dans un élément isolé tel que le pain de sculpture T11₂ de la figure 11. Les deux types d'éléments de sculpture sont évoqués dans la demande de brevet EP1076235A1. On peut encore citer la demande de brevet FR01/01672, qui décrit un élément tel que le pain de sculpture T11₂ de la figure 11, comportant une partie centrale T12₂ et son utilité pour l'évaluation du potentiel de frottement de cet élément de sculpture et du potentiel d'adhérence du pneumatique.

Soulignons encore que le choix du sens d'implantation du capteur ne dépend pas du type d'élément de sculpture auquel il est associé, seul son étalonnage pouvant dépendre du sens d'implantation, et du type d'élément de sculpture auquel il est associé.

A la figure 10, on a aussi illustré que le capteur C peut également être positionné entre deux éléments de sculpture (pains isolés ou nervures) adjacents dans le sens longitudinal ou transversal de la bande roulement, et là encore aussi bien tige orientée vers la surface de la bande de roulement qu'orientée vers l'armature de renforcement.

L'essentiel est que le capteur soit inséré dans la zone non usante de la bande de roulement pour garantir son fonctionnement durant toute la vie du pneumatique en utilisation normale. Pour un pneumatique comportant une armature de renforcement et une bande de roulement, ladite bande de roulement comportant une partie destinée à être usée, le capteur est donc disposé dans la bande de roulement, entre la partie destinée à être usée et l'armature de renforcement.

Selon une variante de réalisation de l'invention illustrée à la figure 13, un accessoire T17, rigide ou semi-rigide, de plus grande taille que le capteur C lui même peut lui être adjoint, notamment dans le but de faciliter son positionnement pendant la fabrication du pneumatique, et d'éviter notamment qu'il ne se déplace lors de l'étape de moulage du pneumatique. Ledit accessoire T17 peut être en métal, en polymère ou encore en céramique. Il est préférable que sa rigidité soit supérieure à celle de l'élastomère chargé constituant la bande roulement T1, et que sa surface soit supérieure à la plus grande surface du capteur C. Là encore, le sens d'implantation de la tige 1 du capteur C représenté à la figure 13 n'est pas limitatif.

Selon une autre variante illustrée à la figure 14, le capteur peut encore être muni sur sa face externe d'un ou plusieurs ergot T18, toujours dans le but de faciliter son positionnement lors de la fabrication du pneumatique et d'éviter qu'il ne se déplace lors de l'étape de moulage. Ledit ergot ou lesdits ergots T18 sont constitués d'un matériau de préférence assez rigide, par exemple un métal, une céramique, un polymère ou encore du silicium. Selon une disposition plus particulière de cette variante, l'ergot peut être terminé par une tête ou un crochet destiné à assurer encore un meilleur positionnement et une meilleure stabilité de sa position lors de l'étape de moulage et de cuisson du bandage.

On peut en particulier combiner les deux variantes d'implantation du capteur précédemment décrites.

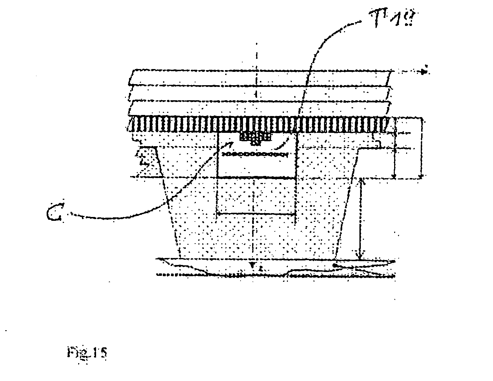

Enfin, selon une autre aspect, illustrée à la figure 15, totalement indépendant des choix d'implantation du capteur C, il peut être souhaitable d'associer au capteur C une embase T19 formée par exemple par une plaque rigide ou semi rigide, positionnée là encore dans la zone non usante de la bande de roulement. entre le capteur et le sol. Un intérêt d'une telle embase T19 est de moyenner les efforts transmis au capteur selon l'axe vertical par l'élastomère chargé de la bande de roulement. Un autre intérêt réside dans la protection du capteur, lorsque le pneumatique roule sur un cailloux ou quelque chose de similaire. Un cailloux particulièrement pointu peut provoquer dans un élément de sculpture, en cours de roulage, des champs de contraintes verticales locales particulièrement élevées, transmises au capteur par l'intermédiaire de l'élastomère chargé composant la sculpture du pneumatique, et pourrait provoquer la destruction du capteur. Le matériau de l'élément plaque rigide ou semi rigide peut être par exemple un métal, une céramique, un polymère, du silicium, ou encore un composite composé d'une matrice élastomère chargé et d'un matériau tel que ceux utilisés dans la réalisation des armatures de renforcement pour les pneumatiques. Il convient bien entendu que la rigidité de ladite embase T19 soit supérieure à celle de l'élastomère chargé composant la bande de roulement et que ladite embase T19 soit capable de moyenner les contraintes transmises par les aspérités du sol. La surface de ladite embase T19 est de préférence au moins égale à celle du capteur, et de préférence au plus égale à la surface de l'élément de sculpture T11.

Le fonctionnement du capteur nécessite au minimum une électronique de mesure, un système d'alimentation, et un système de codage et de transmission des données vers le véhicule.

Quant à l'électronique de mesure. elle peut être réalisée sous forme d'ASIC de très petite taille et être soit accolée au capteur lui-même, par exemple dans l'insert, soit positionnée à coté de celui-ci, toujours de préférence à l'opposé de la partie sensible du capteur.

L'alimentation du capteur en énergie peut être assurée par une pile ou une micro batterie insérée avec le capteur C, par exemple dans un insert prémoulé. Des connexions similaires à celles décrites précédemment peuvent être prévues pour relier le capteur à la source d'énergie. Dans une autre configuration cette alimentation pourrait être une télé alimentation. La transmission des données vers le véhicule peut se faire avec des moyens classiques de télétransmission. L'électronique de codage de l'information est intégrée sous forme d'ASIC et connectée à une antenne, par exemple une antenne de champ électrique de type quart d'onde, positionnée dans la bande de roulement. L'ensemble de ces éléments est de préférence intégré avec le capteur et l'électronique de mesure dans un insert tel que décrit ci dessus. Le matériau et la forme de l'antenne sont choisis de façon à ne pas dégrader l'endurance du pneumatique.

Une autre solution consiste à télé alimenter le capteur au moyen de procédé classique de télé alimentation. On peut par exemple positionner une antenne T20 de type boucle, dite antenne secondaire, dans le mélange d'élastomère chargé constituant un flanc T12 du pneumatique T, ou sous la bande roulement T11. Cette antenne secondaire est reliée électriquement à l'électronique du capteur par un câble T21. Une antenne dite primaire (non représentée) est positionnée sur le véhicule en regard de l'antenne secondaire. La source de puissance est dans le véhicule ; c'est par exemple la batterie de celui-ci. La transmission de puissance de l'antenne primaire fixe positionnée sur le véhicule, à l'antenne secondaire tournante avec le pneumatique et relié électriquement au capteur, se fait par couplage inductif. Dans un tel cas, la transmission des données est effectuée par les mêmes antennes, par exemple par modulation de fréquence ou d'amplitude du signal de puissance.

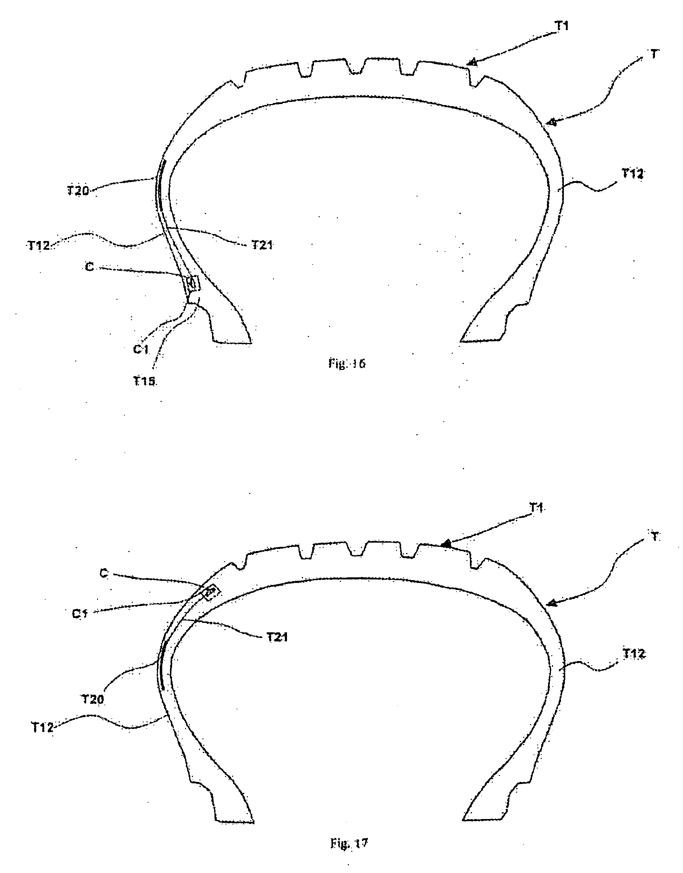

Aux figures 16 et 17, on a illustré, parmi de nombreuses variantes d'implantations possibles, deux autres implantations dans une partie non usante du pneumatique. A la figure 16, le capteur C est inséré entre un flanc T12 et le bourrelet T15. A la figure 17, le capteur C est inséré entre un flanc T12 et la bande de roulement T1, c'est à dire dans l'épaule. Il ne s'agit évidemment pas de faire des mesures dans la bande de roulement. Le capteur C pertmet, quelle que soit la zone du pneumatique dans laquelle il est implanté, d'effectuer des mesures de la contrainte de compression s₁₁, et des deux contraintes de cisaillement notées t₁₂ et t₁₃ (voir figure 9) à l'endroit où est implanté le capteur. On voit également que le capteur peut être relié à une antenne T20 par un câble T21.

## Revendications

1. Capteur de force de type clou comportant une tige (1) rigide destinée à être sollicitée par la force à capter et une tête (2), la tête (2) comportant un élément (5) solidaire de la tige (1), destiné à être déformé ou être contraint lorsque la tige est sollicitée, cet élément déformable (5) portant des moyens de mesure (M1, M2, M3, M4) de la déformation ou de la contrainte et comportant des points d'ancrage (6) qui ont une position par rapport à la tige (1) au repos et qui conservent sensiblement cette position lorsque la tige (1) est sollicitée, ledit capteur comportant un capot (11) adapté à protéger l'élément déformable (5), ce capot (11) étant fixé aux points d'ancrage (6), **caractérisé en ce qu'**un circuit de traitement de mesure délivrée par les moyens de mesure (M1, M2, M3, M4) est placé dans une cavité hermétique (14) délimitée par le capot (11) et délivre des informations vers l'extérieur de la cavité hermétique (14) via une connexion qui traverse la fixation entre le capot (11) et les points d'ancrage (6).

2. Capteur de force conforme à la revendication 1, **caractérisé en ce que** la continuité électrique de la connexion est réalisée au moyen d'une bille conductrice noyée dans un scellement de fixation du capot (11) aux points d'ancrage (6).

3. Capteur de force conforme à l'une des revendications 1 ou 2, **caractérisé en ce que** les points d'ancrage (6) sont continus sur le bord de l'élément déformable (5).

4. Capteur de force conforme à l'une des revendications 1 à 3, **caractérisé en ce que** l'élément déformable (5) est une membrane pleine.

5. Capteur de force conforme à la revendication 4, **caractérisé en ce que** la membrane pleine est circulaire.

6. Capteur de force conforme à l'une des revendications 1 à 5, **caractérisé en ce que** le capot est fixé à la périphérie de l'élément déformable (5).

7. Capteur de force conforme à l'une des revendications 1 à 6, **caractérisé en ce que** le capot (11) porte tout ou partie du circuit électronique de traitement de mesure délivrée par les moyens de mesure (M1, M2, M3, M4).

8. Capteur de force conforme à la revendication 7, **caractérisé en ce que** le circuit électronique est fixé sur une paroi interne du capot (11).

9. Capteur de force conforme à l'une des revendications 1 à 8, **caractérisé en ce que** la tige (1), l'élément déformable (5) et le capot (11) sont réalisés à base de matériaux tels que le silicium, le quartz, un métal.

10. Capteur de force conforme à l'une des revendications 1 à 9, **caractérisé en ce que** les moyens de mesure (M1, M2, M3, M4) sont réalisés par des dispositifs de mesure de déformation de contrainte répartis sur l'élément déformable (5).

11. Capteur de force conforme à l'une des revendications 1 à 10, dans lequel l'élément déformable (5) est réalisé en silicium, **caractérisé en ce que** les dispositifs de mesure (M1, M2, M3, M4) sont disposés selon les axes cristallins <110> de l'élément déformable (5).

## Claims

1. Force sensor of the stud type comprising a rigid stem (1) designed to be acted upon by the force to be sensed and a head (2), the head (2) comprising an element (5) secured to the stem (1), designed to be deformed or to be stressed when the stem is acted upon, this deformable element (5) supporting means (M1, M2, M3, M4) for measuring the deformation or the stress and comprising anchor points (6) which have a position relative to the stem (1) at rest and which substantially retain this position when the stem (1) is acted upon, the said sensor comprising a cap (11) suitable for protecting the deformable element (5), this cap (11) being attached to the anchor points (6), **characterised in that** a circuit for the processing of measurement delivered by the measurement means (M1, M2, M3, M4) is placed in a hermetically sealed cavity (14) delimited by the cap (11) and delivers information to the outside of the hermetically sealed cavity (14) via a connection which passes through the attachment between the cap (11) and the anchor points (6).

2. Force sensor according to claim 1, **characterised in that** the electric continuity of the connection is achieved by means of a conductive ball sunk into a setting for attaching the cap (11) to the anchor points (6) .

3. Force sensor according to one of claims 1 and 2, **characterised in that** the anchor points (6) are continuous on the edge of the deformable element (5).

4. Force sensor according to one of claims 1 to 3, **characterised in that** the deformable element (5) is a solid membrane.

5. Force sensor according to claim 4, **characterised in that** the solid membrane is circular.

6. Force sensor according to one of claims 1 to 5, **characterised in that** the cap is attached to the periphery of the deformable element (5).

7. Force sensor according to one of claims 1 to 6, **characterised in that** the cap (11) supports some or all of the electronic circuit for processing the measurement delivered by the measurement means (M1, M2, M3, M4).

8. Force sensor according to claim 7, **characterised in that** the electronic circuit is attached to an inner wall of the cap (11).

9. Force sensor according to one of claims 1 to 8, **characterised in that** the stem (1), the deformable element (5) and the cap (11) are made on the basis of materials such as silicon, quartz, a metal.

10. Force sensor according to one of claims 1 to 9, **characterised in that** the measurement means (M1, M2, M3, M4) are made by devices for measuring stress deformation distributed over the deformable element (5).

11. Force sensor according to one of claims 1 to 10, in which the deformable element (5) is made of silicon, **characterised in that** the measurement devices (M1, M2, M3, M4) are placed along the crystalline axes <110> of the deformable element (5).

## Patentansprüche

1. Kraftsensor vom Typ Nagel, der einen starren Stift (1), der dazu vorgesehen ist, durch die zu erfassende Kraft belastet zu werden, und einen Kopf (2) umfasst, der ein mit dem Stift (1) fest verbundenes Element (5) umfasst, das dazu vorgesehen ist, verformt oder beansprucht zu werden, wenn der Stift belastet wird, wobei dieses verformbare Element (5) Messmittel (M1, M2, M3, M4) für die Verformung oder die Beanspruchung trägt und Verankerungspunkte (6) umfasst, die eine Position in Bezug auf den Stift (1) in der Ruhelage haben und diese Position im Wesentlichen beibehalten, wenn der Stift (1) belastet ist, wobei der Sensor eine Haube (11) umfasst, die dafür ausgelegt ist, das verformbare Element (5) zu schützen, wobei diese Haube (11) an den Verankerungspunkten (6) fixiert ist, **dadurch gekennzeichnet, dass** eine Schaltung zur Verarbeitung der von den Messmitteln (M1, M2, M3, M4) gelieferten Messung in einem luftdichten Hohlraum (14) angeordnet ist, der von der Haube (11) begrenzt ist, und über eine Verbindung, die die Befestigung zwischen der Haube (11) und den Verankerungspunkten (6) durchquert, aus dem luftdichten Hohlraum (14) nach außen Informationen liefert.

2. Kraftsensor nach Anspruch 1, **dadurch gekennzeichnet, dass** die elektrische Kontinuität der elektrischen Verbindung mit Hilfe einer leitenden Kugel verwirklicht ist, die in eine Versiegelung zur Befestigung der Haube (11) an den Verankerungspunkten (6) eingebettet ist.

3. Kraftsensor nach einem der Ansprüche 1 oder 2, **dadurch gekennzeichnet, dass** die Verankerungspunkte (6) am Rand des verformbaren Elements (5) kontinuierlich sind.

4. Kraftsensor nach einem der Ansprüche 1 bis 3, **dadurch gekennzeichnet, dass** das verformbare Element (5) eine massive Membran ist.

5. Kraftsensor nach Anspruch 4, **dadurch gekennzeichnet, dass** die massive Membran kreisförmig ist.

6. Kraftsensor nach einem der Ansprüche 1 bis 5, **dadurch gekennzeichnet, dass** die Haube am Umfang des verformbaren Elements (5) befestigt ist.

7. Kraftsensor nach einem der Ansprüche 1 bis 6, **dadurch gekennzeichnet, dass** die Haube (11) die elektronische Schaltung zur Verarbeitung der von den Messmitteln (M1, M2, M3, M4) gelieferten Messung ganz oder teilweise trägt.

8. Kraftsensor nach Anspruch 7, **dadurch gekennzeichnet, dass** die elektronische Schaltung an einer Innenwand der Haube (11) befestigt ist.

9. Kraftsensor nach einem der Ansprüche 1 bis 8, **dadurch gekennzeichnet, dass** der Stift (1), das verformbare Element (5) und die Haube (11) auf der Basis von Materialien wie Silicium, Quarz und einem Metall verwirklicht sind.

10. Kraftsensor nach einem der Ansprüche 1 bis 9, **dadurch gekennzeichnet, dass** die Messmittel (M1, M2, M3, M4) durch Vorrichtungen zum Messen der Beanspruchungsverformung verwirklicht sind, die auf dem verformbaren Element (5) verteilt sind.

11. Kraftsensor nach einem der Ansprüche 1 bis 10, bei dem das verformbare Element (5) aus Silicium hergestellt ist, **dadurch gekennzeichnet, dass** die Messvorrichtungen (M1, M2, M3, M4) längs der < 110>-Kristallachsen des verformbaren Elements (5) angeordnet sind.
